(19) Europäisches Patentamt
European Patent Office
Office européen des brevets

(11) **EP 3 906 177 B1**

(12) **EUROPÄISCHE PATENTSCHRIFT**

(45) Veröffentlichungstag und Bekanntmachung des Hinweises auf die Patenterteilung:
**09.10.2024 Patentblatt 2024/41**

(21) Anmeldenummer: **19832872.6**

(22) Anmeldetag: **17.12.2019**

(51) Internationale Patentklassifikation (IPC):
$B60K\ 1/04^{(2019.01)}$    $B60L\ 7/00^{(2006.01)}$
$B60L\ 15/20^{(2006.01)}$    $B60K\ 7/00^{(2006.01)}$
$B60T\ 8/17^{(2006.01)}$    $B60K\ 1/00^{(2006.01)}$
$B60T\ 7/20^{(2006.01)}$    $B62D\ 59/04^{(2006.01)}$
$B60T\ 13/66^{(2006.01)}$    $B60L\ 15/38^{(2006.01)}$

(52) Gemeinsame Patentklassifikation (CPC):
**B62D 59/04; B60L 7/00; B60L 15/2009; B60L 15/38; B60T 7/20; B60T 8/1708; B60T 13/662;** B60K 1/04; B60K 7/0007; B60K 2001/0444; B60L 2200/28; B60L 2200/36; B60L 2250/26; B60T 2230/00; B60Y 2200/147;

(Forts.)

(86) Internationale Anmeldenummer:
**PCT/EP2019/085469**

(87) Internationale Veröffentlichungsnummer:
**WO 2020/141065 (09.07.2020 Gazette 2020/28)**

(54) **ANHÄNGERFAHRZEUG UND ANHÄNGERBREMSSTEUERGERÄT SOWIE VERFAHREN UND COMPUTERPROGRAMMPRODUKT DAFÜR**

TRAILER AND BRAKE CONTROL DEVICE FOR TRAILER AND METHOD AND COMPUTER PROGRAM PRODUCT THEREFOR

REMORQUE ET DISPOSITIF DE CONTRÔLE DE FREINAGE DU REMORQUE, PROCÉDÉ ET PRODUIT DE PROGRAMME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.01.2019 DE 102019100017**

(43) Veröffentlichungstag der Anmeldung:
**10.11.2021 Patentblatt 2021/45**

(73) Patentinhaber: **ZF CV Systems Europe BV**
**1170 Brussels (BE)**

(72) Erfinder:
• **HESEDING, Johannes**
**30169 Hannover (DE)**
• **SCHÜNEMANN, Gerd**
**30880 Laatzen (DE)**

• **REINERS, Jan**
**30177 Hannover (DE)**

(74) Vertreter: **Ohlendorf, Henrike**
**ZF CV Systems Hannover GmbH**
**Am Lindener Hafen 21**
**30453 Hannover (DE)**

(56) Entgegenhaltungen:
**EP-A1- 2 394 890**    **EP-A2- 1 234 739**
**EP-B1- 2 842 814**    **DE-A1- 102015 222 981**
**DE-A1- 102016 123 350**    **US-A1- 2012 245 796**
**US-A1- 2016 318 406**    **US-A1- 2018 086 227**
**US-A1- 2018 304 944**

(52) Gemeinsame Patentklassifikation (CPC): (Forts.)
     B60Y 2400/61; Y02T 10/72

**Beschreibung**

Die Erfindung betrifft die Ansteuerung von elektrischen Antrieben in Anhängerfahrzeugen. Ein Anhängerfahrzeug wird durch ein Zugfahrzeug, das beispielsweise ein Nutzfahrzeug ist, gezogen. Derartige durch Nutzfahrzeuge gezogene Anhängerfahrzeuge, die im Folgenden auch kurz Anhänger genannt werden, sind insbesondere Sattelauflieger und Deichselanhänger.

Nutzfahrzeuge, die neben einem Verbrennungsmotor als primäre Antriebsquelle zusätzlich mindestens einen elektrischen Antrieb zur Unterstützung aufweisen, sind bekannt. Die elektrischen Antriebe dienen in den Nutzfahrzeugen beispielsweise, um den Verbrennungsmotor in einem energieeffizienten Drehzahlbereich betreiben zu können oder zusätzlichen Schub, beispielsweise beim Anfahren oder Bergauffahrten, bereitzustellen. Darüber hinaus kann mit elektrischen Antrieben kinetische und potentielle Energie des Fahrzeugs zurückgewonnen und als elektrische Energie in einem oder mehreren Energiespeichern gespeichert werden.

Es ist ebenfalls bekannt, dass auch Anhänger für Nutzfahrzeuge mit einem elektrischen Antrieb ausgestattet werden können, um durch den Anhänger eine zusätzliche Antriebskraft für das Nutzfahrzeug, beispielsweise bei einer Bergauffahrt, zur Verfügung zu stellen. Zur Ansteuerung eines elektrischen Antriebs des Anhängerfahrzeugs ist beispielsweise aus dem Dokument EP 2 842 814 B1 ein Anhängerfahrzeug bekannt, das einen elektrischen Antrieb aufweist, der mit einem Zugfahrzeug mit hybridem oder rein elektrischem Antrieb gekoppelt ist. Die Ansteuerung des elektrischen Antriebs des Anhängerfahrzeugs wird durch eine Abstimmung von Fahrzeugsteuergerät des Zugfahrzeugs und zusätzlichem Energiemanagementsteuergerät im Anhängerfahrzeug vorgenommen. Weitere Dokumente, wie beispielsweise das Dokument EP 2 394 890 B1 beschreiben Lösungen, bei denen ein elektrischer Antrieb eines mit einem Zugfahrzeug gekoppelten Anhängerfahrzeugs durch Steuersignale angesteuert wird, die durch Messen der Koppelkraft zwischen Anhängerfahrzeug und Zugfahrzeug erzeugt werden. Auch im Hinblick auf die Ansteuerung eines elektrischen Antriebs vollkommen autonom arbeitende Anhängerfahrzeuge, bei denen die Steuersignale für einen elektrischen Antrieb des Anhängerfahrzeugs basierend auf Sensoren zur Bestimmung der Beschleunigung und des Neigungswinkels gewonnen werden, sind beispielsweise aus dem Dokument US 9,694,712 B2 bekannt.

US 2018/304944 A1 offenbart einen aktiv steuerbaren Dolly mit eigener Stromquelle (*self-powered actively steerable converter dolly,* SPASCD). Der Dolly weist ein Systemsteuergerät auf. Das Systemsteuergerät ist mit einem Zugfahrzeug zur Kommunikation verbunden, um Steuersignale von Bauteilen des Zugfahrzeugs zu empfangen oder an diese zu senden. Ein Gaspedal des Zugfahrzeugs liefert ein Eingangssignal für das Systemsteuergerät, um einen Betriebsbereich eines elektrischen Antriebs zu bestimmen.

EP 2 394 890 A1 ein Anhängerfahrzeug mit einer Achse, an der elektrische Motoren angeordnet sind, die jeweils ein Rad der Achse antreiben. Die elektrischen Motoren werden durch einen elektronischen Regler bezüglich Radumdrehungen und Drehmoment für die Räder geregelt. Der elektronische Regler empfängt Daten zu einer Fahrzeugbremsung und -beschleunigung, beispielsweise über ein Betätigen eines Bremspedals an einem Zugfahrzeug, mit dem das Anhängerfahrzeug verbunden ist. Diese Daten werden zum Regeln der elektrischen Motoren genutzt.

US 2016/318406 A1 offenbart ein Anhängerfahrzeug mit einem elektrischen Motor, der eine Antriebsachse antreibt und zur Regeneration von Energie geeignet ist, die dann in Batterien gespeichert werden kann. Das Anhängerfahrzeug weist eine Steuer- und/oder Regelvorrichtung auf, die Energie zwischen dem Motor und den Batterien verwaltet, sowie ein automatisiertes Steuer- und/oder Regelsystem, das Sensoren aufweist und vorhersagen kann, wann und wo Energie aufgewandt oder rückgewonnen werden soll. Eine Fahrzeug-Steuer- und/oder Regeleinheit und ein Fahrzeug-Steuer- und/oder Regelsystem kann Aktionen eines Fahrers wahrnehmen und ein Motorsteuer- und/oder regelgerät, die Batterien und den elektrischen Motor entsprechend steuern und/oder regeln.

DE 10 2016 123 350 A1 offenbart ein hybrides Dämpfungssystem zur Anbringung an einem Anhängerfahrzeug mit einer Antriebsachse, einem elektrischen Motor-Generator zum Antreiben der Antriebsachse und einem Steuer- und/oder Regelgerät, das als Steuer- und/oder Regelsystem ausgebildet ist. Das Steuer- und/oder Regelsystem ist mit dem elektrischen Motor-Generator verbunden. An einem hybriden Zugfahrzeug-Anhängerfahrzeug-System mit dem Anhängerfahrzeug und einem Zugfahrzeug wird ein abgeschätztes Gesamt-Drehmoment berechnet. Dabei wird ein Bremsdruck zur Berechnung eines Bremsdrehmomentanteils an dem abgeschätzten Gesamt-Drehmoment berechnet. Der Bremsdrehmomentanteil oder ein anderer Drehmomentanteil, der durch einen Fahrer des Zugfahrzeugs ausgeübt wird, wird deswegen abgeschätzt, weil das hybride Dämpfungssystem autonom von dem Zugfahrzeug ist und keine direkte Rückmeldung über Fahrereingaben erhält:

EP 1 234 739 A2 offenbart ein Verfahren zum Bremsen eines gezogenen Fahrzeugs mit einem Paar elektrischer Motor-Generatoren und einem Motorsteuergerät zur Steuerung der Motor-Generatoren zur Bereitstellung von regenerativem Bremsen.

US 2012/245796 A1 offenbart ein Fahrzeugsystem mit einem ersten und einem zweiten Fahrzeug mit jeweils unabhängigen Antriebssträngen. Das Fahrzeugsystem weist ein Steuergerät auf, das mit beiden Antriebssträngen verbunden ist.

DE 10 2015 222 981 A1 offenbart ein Hybridsystem für ein Kraftfahrzeug mit einem Anhänger, der eine Anhängerantriebsmaschine aufweist. Der Anhänger weist ein eigenständiges Anhängersteuergerät auf, über das eine Betriebsstrategie für den Anhänger bereitgestellt wird und das über einen CAN-Bus datenaustauschmäßig mit einem Fahrzeugführungsrechner des Kraftfahrzeugs verbunden ist.

All diesen bekannten Lösungen ist gemeinsam, dass diese aufwändig in eine bestehende Systemarchitektur zumindest des Anhängerfahrzeugs integriert werden müssen. Gemäß der obigen Beispiele sind demnach etwa zusätzliche Steuergeräte oder ein komplexes zusätzliches Sensorsystem im Anhängerfahrzeug zu integrieren.

Außerdem ist den beschriebenen Lösungen gemeinsamen, dass diese nicht ideal in die Bewegungsabläufe des Anhängers integriert werden können, sodass einerseits eine nicht optimale Energierückgewinnung beim Bremsen erfolgt und beispielsweise aufgrund unabhängiger Fahrzustandserkennungen des Zugfahrzeugs einerseits und des Anhängers durch die Sensorik des elektrischen Antriebs andererseits potentielle Störungen von Sicherheits- und Stabilitätssystemen auftreten können.

Der Stand der Technik offenbart somit, dass entweder eine komplette Überarbeitung des Gesamtsystems aus Zugfahrzeug und Anhängerfahrzeug erfolgen muss, um dem Anhängerfahrzeug eine ausreichende Informationsbasis über Fahrzustände vom Anhängerfahrzeug, beispielsweise durch zusätzliche komplexe Datenübertragung, zu geben oder, wenn dieser zusätzliche Integrationsaufwand im Zugfahrzeug vermieden werden soll, eine komplexe zusätzliche Sensorik im Anhängerfahrzeug vorzusehen, die dennoch zu den bereits oben genannten Problemen, nämlich zu potentiellen Störungen von Sicherheits- und Stabilitätssystemen, führen kann.

Aufgabe der vorliegenden Erfindung ist es daher, die Integration eines elektrischen Antriebs in ein Anhängerfahrzeug zu verbessern, sodass ein elektrischer Antrieb mit einer hohen Effizienz in möglichst beliebigen Fahrsituationen mit einbeziehbar ist und hierbei leicht in eine vorhandene Kontrollstruktur integrierbar ist, ohne eine komplexe zusätzliche Sensorik oder zusätzliche Steuerungsmodule im Anhängerfahrzeug vorzusehen.

Erfindungsgemäß wird ein Verfahren nach Anspruch 1 vorgeschlagen.

Demnach wird ein Verfahren für ein Anhängerfahrzeug vorgeschlagen, das mit einem Zugfahrzeug kuppelbar ist. Das Verfahren dient für Anhängerfahrzeuge, die einen elektrischen Antrieb aufweisen, zum Ansteuern des elektrischen Antriebs. Hierbei wird zunächst eine aktuelle Gaspedalstellung mit einem Anhängerbremssteuergerät des Anhängerfahrzeugs von einem Zugfahrzeug empfangen. Außerdem wird mit dem Anhängerbremssteuergerät in Abhängigkeit der empfangenen aktuellen Gaspedalstellung ein Ansteuersignal für den elektrischen Antrieb erzeugt. Daraufhin wird der elektrische Antrieb mit dem aktuellen Ansteuersignal angesteuert.

Erfindungsgemäß wird also ein Anhängerbremssteuergerät des Anhängerfahrzeugs verwendet, um ein Ansteuersignal für den elektrischen Antrieb des Anhängerfahrzeugs zu erzeugen. Hieran ist besonders vorteilhaft, dass dem Anhängerbremssteuergerät bereits eine ausreichende Anzahl von Informationen über den aktuellen Zustand oder Fahrzustand des Anhängerfahrzeugs zur Verfügung steht. Beispielsweise ist es gemäß dem Stand der Technik bekannt, dass Achslasten der Achsen des Anhängerfahrzeugs, Beschleunigung in Längsrichtung, Radgeschwindigkeiten mindestens zweier sensierter Räder des Anhängers und/oder Absolutgeschwindigkeit des Fahrzeugs zur Verfügung stehen. Durch zusätzliches Empfangen einer aktuellen Gaspedalstellung des Gaspedals des das Anhängerfahrzeug ziehenden Zugfahrzeugs kann somit ergänzend in einfacher Art und Weise ein positiver Beschleunigungswunsch, nämlich eine gewünschte positive Beschleunigung abgeleitet werden und abhängig von diesem abgeleiteten Beschleunigungswunsch ein Ansteuersignal zum Ansteuern des elektrischen Antriebs erzeugt und ausgegeben werden. Zur Integration muss demnach dem Anhängerbremssteuergerät lediglich zusätzlich die aktuelle Gaspedalstellung vom Zugfahrzeug mitgeteilt werden. Die aktuelle Gaspedalstellung wird demnach in bestehenden Systemen bislang nicht vom Zugfahrzeug an ein Anhängerbremssteuergerät übertragen, sodass in dieser zusätzlichen Übertragung der wesentliche Aufwand zur Integration einer Ansteuerung des elektrischen Antriebs gemäß der Erfindung zu sehen ist. Bei Kenntnis der Gaspedalstellung kann das bestehende Anhängerbremssteuergerät in einfacher Weise um die Funktion der Erzeugung eines Ansteuersignals ergänzt werden.

Demnach wird also eine einfache zu implementierende Umsetzung der Ansteuerung des elektrischen Antriebs eines Anhängerfahrzeugs ermöglicht, wobei gleichzeitig berücksichtigt wird, dass Ansteuersignale mit einem Anhängerbremssteuergerät in geeigneter Weise erzeugbar sind, um störungsfreie Sicherheit und Stabilität des Anhängerfahrzeugs zu gewährleisten.

Gemäß einer ersten Ausführungsform wird außerdem ein Ladezustand, der auch State of Charge (SoC) genannt wird, mindestens eines Akkumulators des elektrischen Antriebs vom Anhängerbremssteuergerät erfasst. Das Ansteuersignal wird dann mit dem Anhängerbremssteuergerät in Abhängigkeit der Gaspedalstellung und des erfassten Ladezustands erzeugt. Vorzugsweise ist im elektrischen Antrieb bereits eine Messung des Ladezustands eines oder mehrerer Akkumulatoren des elektrischen Antriebs vorgesehen. Das aus dieser Messung resultierende Ergebnis wird vorzugsweise von bekannten elektrischen Antrieben auch über eine CAN-Schnittstelle bereitgestellt und kann gemäß der Erfindung über eine CAN-Verbindung zwischen dem elektrischen Antrieb und dem Anhängerbremssteuergerät in einfacher Weise abgerufen und so erfasst werden.

Durch Berücksichtigung des Ladezustands des Akkumulators ist es daher möglich, zu berücksichtigen, inwieweit ein elektrischer Antrieb bei einer Beschleunigung überhaupt einen Beitrag leisten kann, nämlich basierend auf einer zur Verfügung stehenden elektrischen Energiereserve in dem mindestens einen Akkumulator. Ist der Akkumulator beispielsweise vollständig entladen, so kann entsprechend auch bei einer Gaspedalstellung, die einen hohen Beschleunigungswunsch signalisiert, kein zusätzliches Drehmoment mit einem elektrischen Antrieb erzeugt werden, sodass gemäß der Ausführungsform vorzugsweise auch ein Ansteuersignal für den elektrischen Antrieb durch das Anhängerbremssteuergerät erzeugt wird, das diesen entladenen Zustand des Akkumulators berücksichtigt, also den elektrischen Antrieb so ansteuert, dass dieser kein zusätzliches Drehmoment liefert.

Gemäß einer weiteren Ausführungsform wird die aktuelle Geschwindigkeit des Anhängerfahrzeugs vom Anhängerbremssteuergerät erfasst oder bereitgestellt. Hierbei wird vorzugsweise die aktuelle Geschwindigkeit dem Anhängerbremssteuergerät, das mit einem Fahrzeugbremssteuergerät des das Anhängerfahrzeug ziehenden Zugfahrzeugs über eine standardisierte Datenverbindung, nämlich insbesondere nach ISO 11992-2, verbunden ist, bereitgestellt. Dem Anhängerbremssteuergerät wird somit zum Erzeugen des Ansteuersignals die aktuelle Geschwindigkeit bereitgestellt. Zusätzlich oder alternativ wird die aktuelle Geschwindigkeit durch Drehzahlsensoren des Anhängerbremssteuergeräts zum Bestimmen der Drehzahl der Räder des Anhängerfahrzeugs erfasst.

Weiterhin wird unter Verwendung einer Drehmomentkennlinie, die vorzugsweise im Anhängerbremssteuergerät oder in einer Steuerung des elektrischen Antriebs hinterlegt wird und die geschwindigkeitsabhängige maximale Drehmomentwerte aufweist, in Abhängigkeit der bereitgestellten oder erfassten aktuellen Geschwindigkeit, ein aktuell maximaler Drehmomentwert ermittelt. Demnach ist eine Drehmomentkennlinie vorgesehen, die unterschiedlichen Geschwindigkeitswerten, beispielsweise im Bereich von 0 bis 100 oder bis 150 Stundenkilometern, jeweils einen maximalen Drehmomentwert des elektrischen Antriebs zuordnet. Dieser maximale Drehmomentwert ist beispielsweise ein bei der aktuellen Geschwindigkeit bevorzugter Wert, der erzeugbar ist, ohne, dass der elektrische Antrieb außerhalb vorgegebener Betriebsgrenzen und mit einem Wirkungsgrad oberhalb eines vorgesehenen Schwellenwerts arbeitet. Somit kann also für jede aktuelle Geschwindigkeit des Fahrzeugs ein maximaler Drehmomentwert ermittelt werden.

Hier wird der Begriff einer Drehmomentkennlinie stellvertretend für einen hergestellten vordefinierten Zusammenhang zwischen maximalen Drehmomentwerten und Geschwindigkeitswerten verwendet. Anstatt einer Drehmomentkennlinie kann auch eine Tabelle oder eine Funktion, die einen entsprechenden Zusammenhang herstellt, hinterlegt oder bereitgestellt sein.

Außerdem wird in Abhängigkeit der aktuellen Gaspedalstellung und des ermittelten maximalen Drehmoments das Ansteuersignal erzeugt. Dies erfolgt beispielsweise, indem eine relative Gaspedalstellung aus der aktuellen Gaspedalstellung abgeleitet wird. Vorzugsweise entspricht die aktuelle Gaspedalstellung bereits einem relativen Wert einer Gaspedalstellung, wobei auch vorgesehen sein kann, dass die aktuelle Gaspedalstellung beispielsweise durch absolute Werte dargestellt ist und daher in eine relative Gaspedalstellung umgerechnet werden muss. Die relative Gaspedalstellung entspricht dann beispielsweise einem Prozentwert und es wird ein Ansteuerdrehmomentwert bestimmt, der dem Prozentwert vom ermittelten maximalen Drehmomentwert entspricht. Es wird also eine relative Gaspedalstellung, also beispielsweise ein Wert der Gaspedalstellung zwischen 0 und 100 Prozent, aus der aktuellen Gaspedalstellung abgeleitet oder, wenn die aktuelle Gaspedalstellung beispielsweise bereits als relativer Wert, beispielsweise im Bereich von 0 bis 100 Prozent, vom Anhängerbremssteuergerät empfangen wurde, der relative Wert verwendet, um einen Ansteuerdrehmomentwert zu ermitteln, das dem Prozentanteil der Gaspedalstellung zum aktuell ermittelten maximalen Drehmomentwert entspricht.

Es wird also in Abhängigkeit der Geschwindigkeit zunächst ein maximaler Drehmomentwert des elektrischen Antriebs erfasst und in Abhängigkeit der Gaspedalstellung ein Ansteuerdrehmoment erzeugt. Dieses bestimmte oder ermittelte Ansteuerdrehmoment wird dann vom Anhängerbremssteuergerät zum Erzeugen des Ansteuersignals für den elektrischen Antrieb verwendet.

Hierzu wird der Ansteuerdrehmomentwert oder ein aus dem Ansteuerdrehmomentwert abgeleiteter, also vom Ansteuerdrehmomentwert abhängiger, angepasster Ansteuerdrehmomentwert, als Ansteuersignal an den elektrischen Antrieb ausgegeben. So kann auf einfache Weise das Ansteuersignal für den elektrischen Antrieb als Drehmomentwert erzeugt werden.

Gemäß einer weiteren Ausführungsform wird ein Ladezustand mindestens eines Akkumulators des elektrischen Antriebs des Anhängerfahrzeugs mit dem Anhängerbremssteuergerät erfasst. Ein Erfassen des Ladezustands des Akkumulators umfasst auch ein Empfangen eines Signals, das den Ladezustand des Akkumulators angibt. Demnach ist beispielsweise im elektrischen Antrieb bereits eine Messung, beispielsweise der Spannung des Akkumulators, die abhängig vom Ladezustand ist, vorgesehen und es wird, beispielsweise über eine Busverbindung zwischen dem Anhängerbremssteuergerät und dem elektrischen Antrieb, dieser Spannungswert oder ein daraus abgeleiteter Ladezustand an das Anhängerbremssteuergerät übertragen. Das Erfassen umfasst dann also das Empfangen des Ladezustands oder das Empfangen der Spannung des Akkumulators und Ableiten des Ladezustands aus der empfangenen Spannung. Gemäß dieser Ausführungsform wird dann ein zuvor ermittelter Ansteuerdrehmomentwert in Abhängigkeit des Ladezustands angepasst und als Ansteuersignal an den elektrischen Antrieb ausgegeben.

Demnach wird also nicht, wie in der vorhergehenden Ausführungsform, der Ansteuerdrehmomentwert direkt als Ansteuersignal ausgegeben, sondern der Ansteuerdrehmomentwert wird so angepasst, dass dieser den Ladezustand des Akkumulators des elektrischen Antriebs berücksichtigt. Der angepasste Ansteuerdrehmomentwert wird dann als Ansteuersignal an den elektrischen Antrieb des Anhängerfahrzeugs ausgegeben. Hierbei kann berücksichtigt werden, dass beispielsweise bei einer hohen Ladung des Akkumulators und somit viel verfügbarer Energie beispielsweise ein vergleichsweise höherer Ansteuerdrehmomentwert als Ansteuersignal ausgegeben werden kann, sodass der elektrische Antrieb vergleichsweise mehr Beitrag zu einer gesamten gewünschten Beschleunigung eines Gespanns aus Zugfahrzeug und Anhängerfahrzeug beitragen kann. Beispielsweise wird dies ausgeführt, obwohl der elektrische Antrieb nicht mehr bei einem derartig hohen Drehmomentwert im idealen Effizienzbereich arbeitet, aber es beispielsweise sinnvoll ist, den Akkumulator zu entladen, um eine ausreichende freie Kapazität für einen späteren Bremsvorgang, der möglicherweise bevorsteht, bereitzuhalten. Andererseits ist es möglich, einen Ansteuerdrehmomentwert ebenfalls anzupassen, wenn der Ladezustand des Akkumulators gering ist, da so nicht die Gefahr einer kompletten Entladung des Akkumulators durch Ansteuern des elektrischen Antriebs und Erzeugen von positiver Beschleunigungsenergie besteht.

Gemäß einer weiteren Ausführungsform erfolgt die Anpassung des Ansteuerdrehmomentwerts derart, dass im Falle, dass der Ladezustand oberhalb eines vordefinierten Schwellenwerts oder Schwellenwertbereichs liegt, der Ansteuerdrehmomentwert erhöht wird. Hierbei wird der Ansteuerdrehmomentwert beispielsweise durch einen vordefinierten Wert oder einen vordefinierten relativen Wert des Ansteuerdrehmomentwerts erhöht. Im Falle, dass der Ladezustand unterhalb eines vordefinierten Schwellenwerts oder Schwellenwertbereichs liegt, wird der Ansteuerdrehmomentwert verringert. Auch das Verringern des Ansteuerdrehmomentwerts erfolgt beispielsweise durch den oder einen weiteren vordefinierten Wert oder den oder einen weiteren vordefinierten relativen Wert des Ansteuerdrehmomentwerts. Gemäß der Ausführungsform wird demnach ein Schwellenwert oder Schwellenwertbereich vorgesehen, der vorzugsweise so vordefiniert wird, dass dieser einem Ladezustand entspricht oder diesen umfasst, bei dem der mindestens eine Akkumulator im Wesentlichen die Nennspannung des elektrischen Antriebs aufweist. Vorzugsweise, da ein Ackumulator bei der Auslegung des elektrischen Antriebs üblicherweise im Hinblick auf seine Spannung an eine Nennspannung elektrischer zu versorgender Motoren des elektrischen Antriebs angepasst ist, ist beispielsweise ein Schwellenwertbereich von 40 bis 60 Prozent der Gesamtladung geeignet, um den Schwellenwertbereich zu bilden.

Gemäß einer weiteren Ausführungsform umfasst das Erzeugen eines Ansteuersignals in Abhängigkeit der empfangenen aktuellen Gaspedalstellung, dass eine aktuell erwartete Gaspedalstellung des Zugfahrzeugs in Abhängigkeit des aktuellen Zustands des Zugfahrzeugs und/oder Anhängerfahrzeugs ermittelt wird. Daraufhin wird die empfangene aktuelle Gaspedalstellung mit der erwarteten Gaspedalstellung verglichen, um ein Vergleichsergebnis zu erhalten. Der Ansteuerdrehmomentwert wird dann zusätzlich in Abhängigkeit des Vergleichsergebnisses erzeugt und als Ansteuersignal für den elektrischen Antrieb ausgegeben. Ein aktueller Zustand des Anhängerfahrzeugs umfasst beispielsweise eine Fahrzeugmasse, Beladungsverteilung oder Beladung des Anhängerfahrzeugs, die im Anhängerbremssteuergerät bekannt ist. Weiterhin umfasst der Zustand des Anhängerfahrzeugs vorzugsweise die Fahrzeuggeschwindigkeit und Fahrzeugbeschleunigung des Anhängerfahrzeugs, die dem Anhängerbremssteuergerät ebenfalls bekannt sind. So kann abhängig von diesen im Anhängerbremssteuergerät bereits bekannten Werten die erwartete Gaspedalstellung mit der aktuell empfangenen Gaspedalstellung verglichen werden.

Durch Vergleich, also in Abhängigkeit des Vergleichsergebnisses, ergibt sich dann, dass beispielsweise, wenn die empfangene aktuelle Gaspedalstellung über einer erwarteten aktuellen Gaspedalstellung liegt, die einer aktuellen Geschwindigkeit zugeordnet ist, und das Fahrzeug nicht beschleunigt oder sogar langsamer wird, das Fahrzeug bergauf fährt. Liegt beispielsweise die empfangene Gaspedalstellung auf oder unter der erwarteten Gaspedalstellung und beschleunigt das Fahrzeug oder hält die Geschwindigkeit, lässt sich hierdurch auf eine Bergabfahrt schließen. Liegt die empfangene Gaspedalstellung über der erwarteten Gaspedalstellung und beschleunigt das Fahrzeug, lässt sich auf einen Fahrerwunsch schließen, dass eine positive Beschleunigung des Fahrzeugs erfolgen soll. Entspricht demgegenüber die empfangene Gaspedalstellung der erwarteten Gaspedalstellung, so ist von einer Geradeausfahrt mit konstanter Geschwindigkeit auszugehen. Das Vergleichsergebnis zeigt also Fahrzustände des Gespanns an.

Somit kann wiederum aus dem Vergleichsergebnis der empfangenen Gaspedalstellung mit der erwarteten Gaspedalstellung, der also beispielsweise einen Fahrzustand widerspiegelt, darauf geschlossen werden, dass eine Bergauffahrt, eine Bergabfahrt, eine positive Beschleunigung oder eine Geradeausfahrt mit konstanter Geschwindigkeit vorliegt und der elektrische Antrieb beispielsweise dann hinzugeschaltet werden, wenn sein Wirkungsgrad vergleichsweise besonders viel höher ist als der Wirkungsgrad eines Verbrennungsmotors des Zugfahrzeugs. Dies ist insbesondere bei Fahrzuständen, wie einer Fahrzeugbeschleunigung und der Bergauffahrt, der Fall. Hierbei ist zu beachten, dass der elektrische Antrieb im Anhängerfahrzeug, bis auf in Ausnahmesituationen, immer einen höheren Wirkungsgrad als ein Verbrennungsmotor aufweist. Hier geht es darum, aus der bekannten Wirkungsgradcharakteristik des Verbrennungsmotors bei bestimmten Fahrsituationen solche Situationen zu identifizieren, bei denen der Unterschied des Wirkungsgrads des Verbrennungsmotors zum elektrischen Antrieb besonders groß ist, die gewünschte Vortriebsleistung also besonders vorteilhaft zu einem Teil vom elektrischen Antrieb übernommen werden sollte.

Gemäß einer weiteren Ausführungsform erfolgt das Ermitteln einer aktuell erwarteten Gaspedalstellung des Zugfahrzeugs im Anhängerbremssteuergerät in Abhängigkeit einer Gaspedalstellungskennlinie, die eine erwartete Gaspedalstellung in Abhängigkeit einer aktuellen Geschwindigkeit des Fahrzeugs angibt. Die Gaspedalstellungskennlinie wird beispielsweise im Anhängerbremssteuergerät hinterlegt. So ist vom Anhängerbremssteuergerät in einfacher und insbesondere schneller Art und Weise eine erwartete Gaspedalstellung ermittelbar. Wie zuvor wird auch hier von einer Kennlinie gesprochen, wobei auch eine Tabelle oder Funktion vorgesehen sein kann, also der Begriff "Gaspedalstellungskennlinie" auch als Gaspedalstellungstabelle, die aktuellen Geschwindigkeitswerten erwartete Gaspedalstellungswerte zuordnet, oder als Gaspedalstellungsfunktion, die eine erwartete Gaspedalstellung in Abhängigkeit einer aktuellen Geschwindigkeit angibt, verstanden wird.

Gemäß einer weiteren Ausführungsform wird die Gaspedalstellungskennlinie in Abhängigkeit weiterer Zustände des Anhängerfahrzeugs, insbesondere des aktuellen Gewichts des Anhängerfahrzeugs, im Anhängerfahrzeugsteuergerät angepasst. Demnach wird berücksichtigt, dass die Masse eines Zugfahrzeugs im Wesentlichen konstant ist, wohingegen ein Anhängerfahrzeug beladungsabhängig unterschiedliche Gesamtmassen aufweisen kann. Dies hat einen Einfluss auf die benötigte Vortriebsleistung, die beispielsweise bei konstanter Geschwindigkeit vergleichsweise erhöht ist. Somit ist auch eine vergleichsweise veränderte Gaspedalstellung zu erwarten, wenn eine vergleichsweise geänderte Masse des Anhängerfahrzeugs vorliegt. Dem wird Sorge getragen, indem die Gaspedalstellungskennlinie an Zustände des Anhängerfahrzeugs, nämlich hier des aktuellen Gewichts bzw. der aktuellen Masse, angepasst wird.

Zur Begriffsklärung ist zu unterscheiden zwischen aktuellem Zustand des Anhängerfahrzeugs, der beispielsweise die aktuelle Geschwindigkeit, die Masse, die Ladungsverteilung und dergleichen umfasst, wohingegen ein Fahrzustand eine Bergauffahrt, eine Bergabfahrt, positiven Beschleunigungswunsch, negativen Beschleunigungswunsch und normale Geradeausfahrt umfasst.

Gemäß einer weiteren Ausführungsform wird der Ansteuerdrehmomentwert nach folgender Formel berechnet:

$$M^* = \frac{100\%}{100\% - A^*} \cdot (A - A^*) \cdot M_{max}(S1, v)$$

In dieser Formel bezeichnet A die Gaspedalstellung, wohingegen $A^*$ die erwartete Gaspedalstellung bezeichnet. Der Wert $M_{max}(S1, v)$ bezeichnet das maximale Drehmoment des elektrischen Antriebs in Abhängigkeit der aktuellen Geschwindigkeit. Hieraus ergibt sich dann der Ansteuerdrehmomentwert $M^*$, der beispielsweise noch in Abhängigkeit des Ladezustands abgeändert wird.

Auf einfache Art und Weise sind somit bei der Bestimmung des Ansteuersignals, das beispielsweise einen Solldrehmomentwert für den elektrischen Antrieb vorgibt, Fahrzustände, mögliches Drehmoment des elektrischen Antriebs und gegebenenfalls der Ladezustand des Akkumulators des Antriebs berücksichtigbar. Insbesondere ergibt sich auch, dass der elektrische Antrieb nicht nur vorwiegend dann zum Vortrieb eingesetzt wird, wenn es energetisch günstig ist, sondern darüber hinaus ist die Unterstützungsleistung auch direkt abhängig von der absoluten Höhe des Veränderungswunsches der Fahrzeugbewegung durch einen Fahrer. Im Falle der Bergauffahrt, insbesondere, wenn die empfangene Gaspedalstellung unter der erwarteten Gaspedalstellung liegt, führt die genannte Formel auf ein negatives Moment. In diesem Fall wird das tatsächlich angesteuerte Moment, also das Ansteuersignal, auf 0 gesetzt.

Die Gaspedalstellung wird vom Anhängerbremssteuergerät über einen CAN-Bus, nämlich einen CAN-Bus nach ISO 11992-2, empfangen. Hierbei wird die Gaspedalstellung mit der Botschaft EBS 11 übertragen. Diese Botschaft, mit der die Gaspedalstellung empfangen wird, umfasst vorzugsweise einen relativen Wert einer Gaspedalstellung. Gemäß ISO 11992-2 ist ohnehin ein Datenaustausch zwischen dem Fahrzeugbremssteuergerät des Zugfahrzeugs und dem Anhängerbremssteuergerät des Anhängerfahrzeugs über eine CAN-Verbindung vorgesehen. Hierbei ist insbesondere die Botschaft EBS 11, die das Signal "Retarder Demand Value" umfasst, bislang nicht genutzt. Diese umfasst einen Wertebereich von -125 bis 125 Prozent. Es wird vorgeschlagen, die Gaspedalstellung in Prozent direkt als Signal im positiven Wertebereich der Botschaft zu verwenden, dementsprechend also nur den Wertbereich von 0 bis 100 Prozent zu nutzen. Der negative Wertebereich kann etwa für die Fahrzeugverzögerung durch den elektrischen Antrieb im Anhänger genutzt werden.

Insbesondere wird dieser Wert der Gaspedalstellung nicht unmittelbar als eine tatsächliche Gaspedalstellung vom Fahrzeugbremssteuergerät des Zugfahrzeugs ausgegeben, sondern zusätzlich an im Fahrzeugbremssteuergerät des Zugfahrzeugs bekannte Informationen, beispielsweise über den Lenkwinkel und vorzugsweise in Verbindung mit ebenfalls bekannten Geometrieinformationen des Fahrzeuggespanns, eines aktuellen Knickwinkels zwischen Zugfahrzeug und Anhängerfahrzeug angepasst. Überschreitet beispielsweise ein Knickwinkel zwischen Zugfahrzeug und Anhängerfahrzeug einen Wert, bei dem ein Schubbetrieb des Anhängerfahrzeugs zu einem unerwünschten Einknicken des Anhängerfahrzeugs führen würde, wird unabhängig von der tatsächlichen Gaspedalstellung der Wert 0 Prozent übertragen. So kann ohne weitere Datenleitung oder Datenverbindung als einer bereits ohnehin vorgesehenen CAN-Kommunikation über ISO 11992-2, die standardisiert über eine ISO 7638-Schnittstelle, nämlich einen Bremsen-CAN-Bus, vorgesehen ist, lediglich durch zusätzliches Anpassen des Fahrzeugbremssteuergeräts des Zugfahrzeugs, nämlich, dass dieses einen Gaspedalstellungswert über die Botschaft EBS 11 aussendet, das Verfahren realisiert werden.

Das Ansteuersignal für den elektrischen Antrieb wird ebenfalls über den ISO 11992-2 CAN-Bus vom Anhängerbremssteuergerät ausgegeben und vom Fahrzeugbremssteuergerät des Zugfahrzeugs empfangen. In der Botschaft 23 wird der Absolutwert des Ansteuersignals und zusätzlich oder alternativ in der Botschaft 21 ein relativer Wert des Ansteuersignals übertragen. Hierdurch kann das Fahrzeugbremssteuergerät des Zugfahrzeugs den zusätzlich durch das Anhängerfahrzeug bereitgestellten Schub berücksichtigen. Demnach kann das Fahrzeugbremssteuergerät des Zugfahrzeugs anhand des Ansteuersignals ein Anforderungssignal für ein Fahrzeugsteuergerät des Zugfahrzeugs erzeugen.

Außerdem umfasst die Erfindung ein Fahrzeugbremssteuergerät für ein Zugfahrzeug zum Ausführen des Verfahrens und ein Anhängerbremssteuergerät für ein Anhängerfahrzeug zum Ausführen des Verfahrens nach einer der vorgenannten Ausführungsformen. Das Fahrzeugbremssteuergerät ist eingerichtet, eine Gaspedalstellung mittels eines ISO 11992-2 CAN-Busses auszugeben, wobei dies in der Botschaft EBS 11 erfolgt. Außerdem ist das Fahrzeugbremssteuergerät eingerichtet, ein Ansteuersignal zum Ansteuern eines elektrischen Antriebs eines mit dem Zugfahrzeug kuppelbaren Anhängerfahrzeugs vom Anhängerfahrzeug zu empfangen. Das Ansteuersignal weist beispielsweise einen Ansteuerdrehmomentwert oder einen angepassten Ansteuerdrehmomentwert auf und wird über den ISO 11992-2 CAN-Bus in Botschaft 21 und/oder Botschaft 23 vom Anhängerbremssteuergerät empfangen.

Gemäß einer Ausführungsform des Fahrzeugbremssteuergeräts ist dieses eingerichtet, in Abhängigkeit des Ansteuersignals, das vom Anhängerbremssteuergerät empfangbar ist, ein Anforderungssignal für ein Fahrzeugsteuergerät des Zugfahrzeugs auszugeben. Das Fahrzeugbremssteuergerät des Zugfahrzeugs kann mithilfe dieser Information über ein aktuell, vorzugsweise positives, Drehmoment des elektrischen Antriebs des Anhängerfahrzeugs eine entsprechende Anforderung an den Antrieb des Zugfahrzeugs zur äquivalenten Verringerung dessen angesteuerten Drehmoments senden. Dies wird auch Acceleration-Blending genannt. Alternativ kann das Drehmoment des Antriebs des Zugfahrzeugs nicht durch die Ansteuerung eines Drehmoments im Anhänger beeinflusst werden, was Acceleration-Boost genannt wird.

Das Anhängerbremssteuergerät ist eingerichtet, ein Verfahren nach einer der vorgenannten Ausführungsformen auszuführen. Hierbei ist das Anhängerfahrzeug insbesondere eingerichtet, eine Gaspedalstellung von einem Zugfahrzeug zu empfangen und ein Ansteuersignal, das beispielsweise einen Ansteuerdrehmomentwert oder einen angepassten Ansteuerdrehmomentwert umfasst, in Abhängigkeit der empfangenen Gaspedalstellung zu erzeugen und an einen elektrischen Antrieb auszugeben.

Ferner ist ein Fahrzeug mit dem Fahrzeugbremssteuergerät oder einem Anhängerbremssteuergerät, nämlich ein Zugfahrzeug oder ein Anhängerfahrzeug, von der Erfindung umfasst. Zudem ist ein Computerprogrammprodukt, nämlich eine Software, Teil der Erfindung, die das Verfahren nach einer der vorgenannten Ausführungsformen ausführt, wenn es auf einem Anhängerbremssteuergerät ausgeführt wird.

Weitere Ausführungsformen ergeben sich anhand der in den Figuren näher erläuterten Ausführungsbeispiele. Hierbei zeigen

Fig. 1     ein Gespann,

Fig. 2     ein Wirkungsgradkennfeld,

Fig. 3     eine Gaspedalstellungskennlinie und

Fig. 4     die Schritte des Verfahrens.

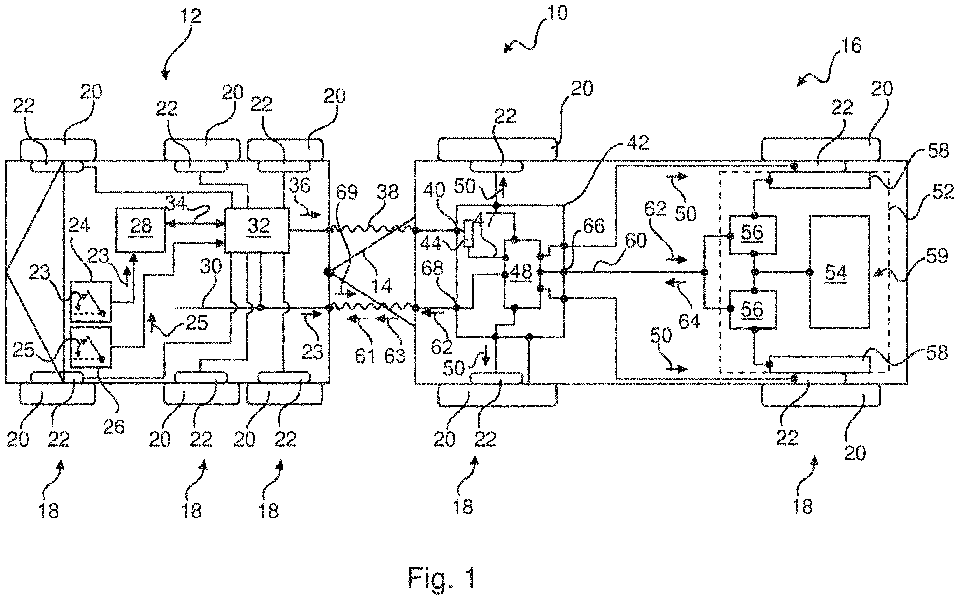

Fig. 1 zeigt ein Gespann 10, umfassend ein Zugfahrzeug 12, das beispielsweise ein Nutzfahrzeug ist und über eine Deichsel 14 mit einem Anhängerfahrzeug 16 verbunden ist. Das Anhängerfahrzeug 16 ist somit durch das Zugfahrzeug 12 ziehbar. Das Zugfahrzeug 12 sowie das Anhängerfahrzeug 16 umfassen jeweils mehrere Achsen 18, die jeweils zwei Räder 20 aufweisen. Jedes der Räder 20 ist mit einer Reibbremse 22 ausgestattet, um im Falle eines Bremswunsches, nämlich einer angeforderten negativen Beschleunigung, die Räder 20 zu bremsen. Mindestens eine der Achsen 18 des Zugfahrzeugs 12 ist durch einen Verbrennungsmotor oder einen elektrischen Antrieb angetrieben, wobei weder der Verbrennungsmotor noch der elektrische Antrieb zur besseren Übersicht in Fig. 1 dargestellt sind.

Zum Antreiben des Zugfahrzeugs 12 wird durch Variation einer Gaspedalstellung 23 eines Gaspedals 24 und durch Variation einer Bremspedalstellung 25 eines Bremspedals 26 durch einen Bediener des Zugfahrzeugs 12 ein Wunsch einer Geschwindigkeitserhöhung bzw. ein Bremswunsch signalisiert. Das Gaspedal 24 ist zur Übermittlung der Gaspedalstellung 23 mit einem Fahrzeugsteuergerät 28 verbunden. Das Bremspedal 26 ist zur Übermittlung der Bremspedalstellung 25 mit einem Fahrzeugbremssteuergerät 32 verbunden. Das Fahrzeugsteuergerät 28 übermittelt Steuersignale zum Ansteuern des nicht dargestellten Antriebs auf einen mit dem Fahrzeugsteuergerät 28 verbundenen nicht dargestellten Bus. Das Fahrzeugsteuergerät 28 überträgt die Gaspedalstellung 23 weiter über eine Verbindung 34 an das Fahrzeugbremssteuergerät 32. Das Fahrzeugbremssteuergerät 32 gibt die Gaspedalstellung 23 in einer Botschaft, insbesondere Botschaft EBS 11, auf einem nach ISO 11992 standardisierten Bus 30 aus.

Außerdem sind mit dem Fahrzeugbremssteuergerät 32 die Reibbremsen 22 des Zugfahrzeugs 12 verbunden, sodass im Falle eines durch das Bremspedal 26 ausgelösten Bremswunsches dieser in Bremssignale für die Reibbremsen 22 des Zugfahrzeugs 12 umsetzbar ist.

Außerdem erzeugt das Fahrzeugbremssteuergerät 32 des Zugfahrzeugs 12 im Falle eines Bremswunsches einerseits ein negatives Beschleunigungsanforderungssignal für das Anhängerfahrzeug 16, das über den Bus 30 an das Anhängerbremssteuergerät 42 übertragen wird, und andererseits einen Bremssteuerdruck 36, der über eine Bremssteuerleitung 38 ebenfalls als negatives Beschleunigungsanforderungssignal an das Anhängerfahrzeug 16 übermittelt wird. Die Übertragung des negativen Beschleunigungsanforderungssignals über die Bremssteuerleitung 38 ist als redundanter Übertragungspfad zu sehen. Im Normalzustand wird demnach ein Sollwert des Beschleunigungsanforderungssignals über den Bus 30 zur Ansteuerung der Reibbremsen 22 des Anhängerfahrzeugs 16 durch das Anhängerbremssteuergerät 42 verwendet. Bei Ausfall des Bussignals wird das Beschleunigungsanforderungssignal über die Bremssteuerleitung 38 empfangen. Die Bremssteuerleitung 38 ist hierzu mit einem ersten Eingang 40 eines Anhängerbremssteuergeräts 42 verbunden. Ein Sensor 44 des Anhängerbremssteuergeräts 42 wandelt den Bremssteuerdruck 36, der über die Bremssteuerleitung 38 übertragen wird, in ein elektrisches Signal 47 und übermittelt dies an eine Steuerung 48 des Anhängerbremssteuergeräts 42. In Abhängigkeit dieses Signals 47 sind Reibbremsen 22 der hier dargestellten zwei Achsen 18 des Anhängerfahrzeugs 16 ansteuerbar. Somit werden in Abhängigkeit des Bremssteuerdrucks 36, der über die Bremssteuerleitung 38 dem Anhängerbremssteuergerät 42 als Beschleunigungsanforderungssignal zugeführt wird, Signale, nämlich Bremsansteuersignale 50, ausgegeben, um die Reibbremsen 22 anzusteuern.

Zusätzlich verfügt das Anhängerfahrzeug 16 über einen elektrischen Antrieb 52, der einen Akkumulator 54, der wiederaufladbar ist, umfasst. Neben dem Akkumulator 54 umfasst der elektrische Antrieb zwei Umrichter 56, die mit der Energie des Akkumulators 54 elektrische Motoren 58 mit Energie versorgen, um ein positives Drehmoment zu erzeugen. Der Akkumulator 54, die Umrichter 56 und die elektrischen Motoren 58 entsprechen Komponenten 59 des elektrischen Antriebs 52. Gemäß einem alternativen, hier nicht dargestellten Ausführungsbeispiel ist nur ein elektrischer Motor 58 zum Antrieb beider Räder 20 der Achse 18 vorgesehen, der seine Antriebskraft über ein Differentialgetriebe an die Räder 20 aufteilt. Im Falle, dass also nur ein elektrischer Motor 58 vorgesehen ist, umfasst der elektrische Antrieb 52 auch nur einen Umrichter 56.

Die elektrischen Motoren 58 können auch im Generatorbetrieb oder generatorischen Betrieb betrieben werden, sodass elektrische Energie über die Umrichter 56 zurück in den Akkumulator 54 gespeist wird. Vorzugsweise wird dieser generatorische Betrieb vom Fahrzeugbremssteuergerät 32 des Zugfahrzeugs 12 über das Anhängerbremssteuergerät 42 angefordert, wenn ein Bremswunsch des Fahrers erfolgt. Demnach kann vorgesehen sein, dass der Einsatz der Reibbremsen 22, wie oben beschrieben, erst dann erfolgt, wenn eine angeforderte Bremsung durch den elektrischen Antrieb 52 nicht ausreicht, um den Bremswunsch umzusetzen. Zum Ansteuern des elektrischen Antriebs 52, nämlich der Umrichter 56, ist der elektrische Antrieb 52 mit dem Anhängerbremssteuergerät 42 über einen weiteren Bus 60 verbunden.

Ein Ansteuern der Umrichter 56 gibt einerseits vor, ob die elektrischen Motoren 58 im Generatorbetrieb oder im Motorbetrieb betrieben werden sollen und welches Drehmoment hierbei aufgewendet werden soll. Im Falle des Betriebes der elektrischen Motoren 58 im Motorbetrieb wird von einem positiven Drehmoment gesprochen, während das Drehmoment, also ein Wert des Drehmoments, im generatorischen Betrieb der elektrischen Motoren 58 als negatives Drehmoment bezeichnet wird. Zum Ansteuern des elektrischen Antriebs 52, nämlich insbesondere der Umrichter 56, wird hierzu von dem Anhängerbremssteuergerät 42 über den Bus 60 ein Ansteuersignal 62 an den elektrischen Antrieb 52 gesendet. Außerdem sendet der elektrische Antrieb 52 einen Ladezustand 64 an das Anhängerbremssteuergerät 42, um dem Anhängerbremssteuergerät 42 beispielsweise oder unter anderem mitteilen zu können, welche aktuell verfügbare Ladungsmenge oder Menge elektrischer Ladung, beispielsweise als Absolutwert, etwa in Amperestunden, oder als Relativwert, etwa ohne Einheit, zur Kapazität des Akkumulators 54 verfügbar ist.

Das Anhängerbremssteuergerät 42 ist außerdem eingerichtet, in Abhängigkeit des Ladezustands 64 und der empfangenen Gaspedalstellung 23 das Ansteuersignal 62 zu erzeugen und über eine Schnittstelle 66 des Busses 30 auszugeben, mit der auch der Ladezustand 64 empfangen wird.

Das Anhängerbremssteuergerät 42 ist entsprechend mit dem Bus 30 über einen weiteren Eingang 68 verbunden, um die Gaspedalstellung 23 zu empfangen. Wie oben ausgeführt, entspricht der Bus 30 einem CAN-Bus und der Eingang 68 einer Schnittstelle für den CAN-Bus. Demnach ist zusätzlich möglich, neben dem Empfang der Gaspedalstellung 23 mit dem Anhängerbremssteuergerät 42 auch das Ansteuersignal 62 an das Fahrzeugbremssteuergerät 32 des Zugfahrzeugs 12 zu übertragen. Dies erfolgt beispielsweise als relativer Wert 61 oder als absoluter Wert 63 eines Ansteuerdrehmomentwerts des Ansteuersignals 62. Weiter wird über den Bus 30 die aktuelle Geschwindigkeit 69 übertragen.

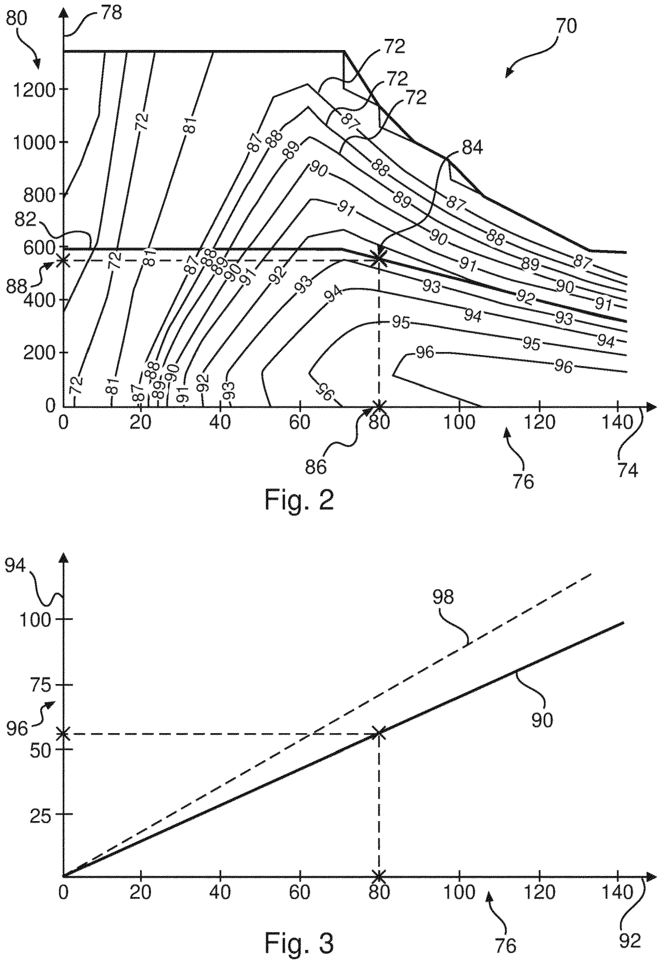

Fig. 2 zeigt ein Wirkungsgradkennfeld 70 des oder der elektrischen Motoren 58 des elektrischen Antriebs 52. Das Wirkungsgradkennfeld 70 zeigt den Wirkungsgradbereich durch Höhenlinien 72 bei über eine waagerechte Achse 74 aufgetragene Fahrzeuggeschwindigkeit 76 und über eine senkrechte Achse 78 aufgetragenen Drehmomentwerten 80 an. Basierend auf dem Wirkungsgradkennfeld 70 ist eine Drehmomentkennlinie 82 vorbestimmt, die so bestimmt wurde, dass diese maximale Drehmomentwerte 84 des elektrischen Antriebs 52, nämlich dessen elektrischer Motoren 58, in Abhängigkeit der Geschwindigkeit 76 angibt, bei denen der elektrische Antrieb 52 vorteilhaft, beispielsweise mit Nennleistung, betrieben werden kann. Die Drehmomentkennlinie 82 ordnet also einen hier beispielhaften maximalen Drehmomentwert 84 bei einer aktuellen Geschwindigkeit 86 von 80 Stundenkilometern dem maximalen Drehmoment 88 von etwa 570 Newtonmetern zu. Die Drehmomentkennlinie 82 kann und wird im Folgenden auch als S1-Kennlinie betrachtet. Ein maximaler Drehmomentwert 84 entspricht daher dem Drehmomentwert 88, der bei einer Geschwindigkeit 86 auf der Drehmomentkennlinie 82, nämlich der S1-Kennlinie, liegt. Entsprechend bestimmt sich der maximale Drehmomentwert 84 gemäß $M_{max}(S1, v)$.

Weiter zeigt Fig. 3 eine Gaspedalstellungskennlinie 90, die jedem auf der waagerechten Achse 92 dargestellten Geschwindigkeitswert 76 einen auf der senkrechten Achse 94 dargestellten Prozentwert einer Gaspedalstellung zuordnet. Die Gaspedalstellungskennlinie 90 ordnet somit jeder Geschwindigkeit 76 des Fahrzeugs eine erwartete Gaspedalstellung 96 zu, die bei konstanter Geradeausfahrt auf ebener Strecke erwartet wird. Die Gaspedalstellungskennlinie 90 ist beispielsweise ebenfalls im Anhängerbremssteuergerät 42 hinterlegt und wird von dem Anhängerbremssteuergerät 42 in Abhängigkeit einer Masse, die sich zum Beispiel durch Beladung des Anhängerfahrzeugs 16 ändert, angepasst. Hier ist beispielsweise ein steilerer Verlauf durch die strichlierte Linie 98 für eine vergleichsweise höhere Masse dargestellt.

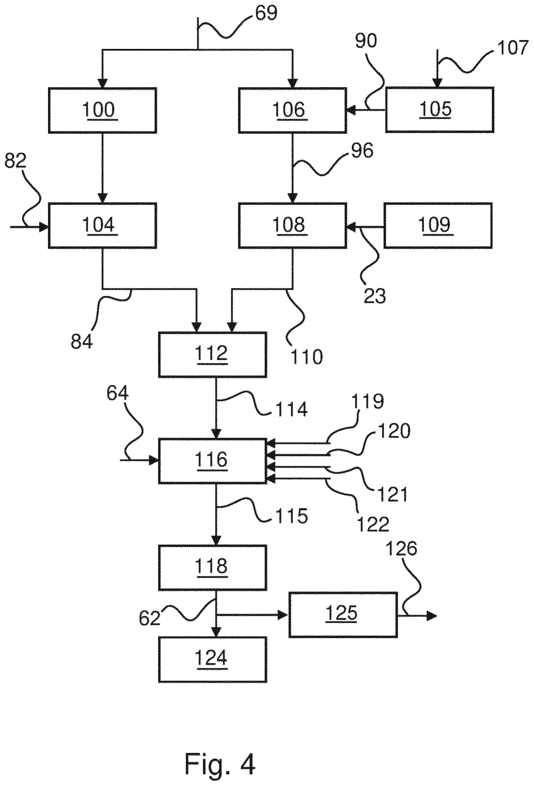

So ergibt sich bei Berücksichtigung des Wirkungsgradkennfeldes 70 zumindest jedoch der Drehmomentkennlinie 82 und der Gaspedalstellungskennlinie 90, die im Anhängerbremssteuergerät 42 hinterlegt sind, das Verfahren gemäß der Schritte, wie sie in Fig. 4 dargestellt sind.

Fig. 4 zeigt demnach die Schritte eines Ausführungsbeispiel des Verfahrens. Demnach zeigt Schritt 100, dass zunächst eine aktuelle Geschwindigkeit 69 bestimmt oder erfasst wird. Im Schritt 104 wird dann anhand der aktuellen Geschwindigkeit 69 sowie einer Drehmomentkennlinie 82 ein maximaler Drehmomentwert 84 bestimmt. Zudem wird parallel in einem Schritt 106 anhand der aktuellen Geschwindigkeit 69 eine erwartete Gaspedalstellung 96 mittels einer Gaspedalstellungskennlinie 90 ermittelt. Die Gaspedalstellungskennlinie 90 wird zuvor in einem Schritt 105 in Abhängigkeit von Zuständen 107 des Anhängerfahrzeugs 16, wie beispielsweise der aktuellen Masse des Anhängerfahrzeugs 16, ermittelt oder eine hinterlegte Gaspedalstellungskennlinie 90 angepasst. Die erwartete Gaspedalstellung 96 wird in einem Schritt 108 mit einer in einem Schritt 109 empfangenen Gaspedalstellung 23 verglichen. Das Vergleichen erfolgt beispielsweise nach folgender Formel:

$$\frac{100\%}{100\% - A^*} \cdot (A - A^*)$$

. Hierbei ist $A$ die empfangene Gaspedalstellung 23, wohingegen $A^*$ die erwartete Gaspedalstellung 96 ist. Das Vergleichsergebnis 110 wird dann einem Schritt 112 ebenso wie der maximale Drehmomentwert 84 zugeführt und diese, beispielsweise durch Multiplikation miteinander, zueinander in Beziehung gesetzt, sodass aus dem Schritt 112 ein Ansteuerdrehmomentwert 114 ausgegeben wird. In einem darauffolgenden Schritt 116 wird dann der Ladezustand 64 eines Akkumulators 54 des elektrischen Antriebs 52 verwendet, um den Ansteuerdrehmomentwert 114 anzupassen. Hierzu wird ein Schwellenwert 119 oder Schwellenwertbereich 120 sowie ein vordefinierter Wert 121 und ein vordefinierter relativer Wert 122 zugeführt. Der angepasste Ansteuerdrehmomentwert 115 wird in einem Schritt 118 als Ansteuersignal 62 ausgegeben. Das Ansteuersignal 62 umfasst hierzu beispielsweise einen Drehmomentwert, der dem Wechselrichter 56 oder den Wechselrichtern 56 des elektrischen Antriebs 52 zugeführt wird und diese im Schritt 124 angesteuert werden. Das Ansteuersignal 62 wird außerdem an ein Fahrzeugbremssteuergerät 32 des Zugfahrzeugs 12 ausgegeben, das hieraus in einem Schritt 125 ein Anforderungssignal 126 für das Fahrzeugsteuergerät 28 erzeugt und ausgibt.

Bezugszeichenliste (Teil der Beschreibung)

| | |
|---|---|
| 10 | Gespann |
| 12 | Zugfahrzeug |
| 14 | Deichsel |
| 16 | Anhängerfahrzeug |
| 18 | Achsen |
| 20 | Räder |
| 22 | Reibbremse |
| 23 | Gaspedalstellung |
| 24 | Gaspedal |
| 25 | Bremspedalstellung |
| 26 | Bremspedal |
| 28 | Fahrzeugsteuergerät |
| 30 | Bus |
| 32 | Fahrzeugbremssteuergerät |
| 34 | direkte Verbindung |
| 36 | Bremssteuerdruck |
| 38 | Bremssteuerleitung |
| 40 | erster Eingang |

| 42 | Anhängerbremssteuergerät |
|---|---|
| 44 | Sensor |
| 47 | elektrisches Signal |
| 48 | Steuerung |
| 50 | Bremsansteuersignal |
| 52 | elektrischer Antrieb |
| 54 | Akkumulator |
| 56 | Umrichter |
| 58 | elektrische Motoren |
| 59 | Komponente |
| 60 | weiterer Bus |
| 61 | relativer Wert |
| 62 | Ansteuersignal |
| 63 | absoluter Wert |
| 64 | Ladezustand |
| 66 | Schnittstelle |
| 68 | weiterer Eingang |
| 69 | aktuelle Geschwindigkeit |
| 70 | Wirkungsgradkennfeld |
| 72 | Höhenlinien |
| 74 | waagerechte Achse |
| 76 | Fahrzeuggeschwindigkeit |
| 78 | senkrechte Achse |
| 80 | Drehmomentwerte |
| 82 | Drehmomentkennlinie |
| 84 | maximaler Drehmomentwert |
| 86 | aktuelle Geschwindigkeit |
| 88 | maximaler Drehmoment |
| 90 | Gaspedalstellungskennlinie |
| 92 | waagerechte Achse |
| 94 | senkrechte Achse |
| 96 | erwartete Gaspedalstellung |
| 98 | strichlierte Linie |
| 100 | Schritt des Verfahrens |
| 104-106 | Schritte des Verfahrens |
| 107 | Zustände des Anhängerfahrzeugs |
| 108, 109 | Schritte des Verfahrens |
| 110 | Vergleichsergebnis |
| 112 | Schritt des Verfahrens |
| 114 | Ansteuerdrehmomentwert |
| 115 | angepasster Ansteuerdrehmomentwert |
| 116-118 | Schritte des Verfahrens |
| 119 | Schwellenwert |
| 120 | Schwellenwertbereich |
| 121 | vordefinierter Wert |
| 122 | vordefinierter relativer Wert |
| 124, 125 | Schritte des Verfahrens |
| 126 | Anforderungssignal |

**Patentansprüche**

1. Verfahren für ein mit einem Zugfahrzeug (12) kuppelbares Anhängerfahrzeug (16) mit einem elektrischen Antrieb (52) zum Ansteuern (120) des elektrischen Antriebs (52), umfassend die Schritte:

    - Empfangen (109) einer aktuellen Gaspedalstellung (23) mit einem Anhängerbremssteuergerät (42) des Anhängerfahrzeugs (16) von einem Zugfahrzeug (12),
    - Erzeugen (104,106,108,112,116) eines Ansteuersignals (62) für den elektrischen Antrieb (52) mit dem Anhängerbremssteuergerät (42) in Abhängigkeit der empfangenen aktuellen Gaspedalstellung (23) und
    - Ansteuern (120) des elektrischen Antriebs (52) mit dem erzeugten Ansteuersignal (62),

**dadurch gekennzeichnet, dass**

    die Gaspedalstellung (23) über einen ISO 11992-2 CAN-Bus (30), nämlich in Botschaft EBS 11, empfangen wird und
    das Ansteuersignal (62) über den ISO 11992-2 CAN-Bus (30), nämlich in Botschaft 21 und/oder 23 als absoluter Wert (63) in der Botschaft 23 und als relativer Wert (61) in der Botschaft 21, an ein Fahrzeugbremssteuergerät (32) des Zugfahrzeugs (12) ausgegeben wird und im Fahrzeugbremssteuergerät (32) ein Anforderungssignal (126) für ein Fahrzeugsteuergerät (28) in Abhängigkeit des Ansteuersignals (62) erzeugt wird.

2. Verfahren nach Anspruch 1, wobei ferner ein Ladezustand (64) mindestens eines Akkumulators (54) des elektrischen Antriebs (52) vom Anhängerbremssteuergerät (42) erfasst wird, und das Ansteuersignal (62) mit dem Anhängerbremssteuergerät (42) in Abhängigkeit der Gaspedalstellung (23) und des erfassten Ladezustands (64) erzeugt wird.

3. Verfahren nach Anspruch 1 oder 2, wobei das Erzeugen des Ansteuersignals (62) umfasst:

    - Erfassen oder Bereitstellen (100) einer aktuellen Geschwindigkeit (69) des Anhängerfahrzeugs (16) im Anhängerbremssteuergerät (42),
    - Ermitteln (104) eines maximalen Drehmomentwerts (84) des elektrischen Antriebs (52) unter Verwendung einer Drehmomentkennlinie (82) mit geschwindigkeitsabhängigen maximalen Drehmomentwerten (84) und der erfassten oder bereitgestellten aktuellen Geschwindigkeit (69) und
    - Ermitteln (112) eines Ansteuerdrehmomentwerts (114) in Abhängigkeit der Gaspedalstellung (23) und des ermittelten maximalen Drehmomentwerts (84),
    - Ausgeben (118) des ermittelten Ansteuerdrehmomentwerts (114) oder eines vom ermittelten Ansteuerdrehmomentwert (114) abhängigen angepassten Ansteuerdrehmomentwerts (115) als Ansteuersignal (62) an den elektrischen Antrieb (52).

**4.** Verfahren nach Anspruch 3, wobei ein Ladezustand (64) eines Akkumulators (54) des elektrischen Antriebs (52) vom Anhängerbremssteuergerät (42) erfasst wird, und der vom Anhängerbremssteuergerät (42) erzeugte Ansteuerdrehmomentwert (114) in Abhängigkeit des erfassten Ladezustands (64) angepasst (116) und der angepasste Ansteuerdrehmomentwert (115) als Ansteuersignal (62) an den elektrischen Antrieb (52) ausgegeben wird.

**5.** Verfahren nach Anspruch 4, wobei das Anpassen (116) des Ansteuerdrehmomentwerts (114) derart ausgeführt wird, dass

- im Falle, dass der Ladezustand (64) des mindestens einen Akkumulators (54) oberhalb eines vordefinierten Schwellenwerts (119) oder Schwellenwertbereichs (120) liegt, der Ansteuerdrehmomentwert (114), insbesondere durch einen vordefinierten Wert (121) oder einen vordefinierten relativen Wert (122) des Ansteuerdrehmomentwerts (114), erhöht wird und
- im Falle, dass der Ladezustand (64) des mindestens einen Akkumulators (54) unterhalb des oder einen weiteren vordefinierten Schwellenwerts (119) oder Schwellenwertbereichs (120) des Ladezustands (64) liegt, der Ansteuerdrehmomentwert (114), insbesondere durch den oder einen weiteren vordefinierten Wert (121) oder den oder einen weiteren vordefinierten relativen Wert (122) des Ansteuerdrehmomentwerts (114), verringert wird.

**6.** Verfahren nach einem der vorhergehenden Ansprüche, wobei das Erzeugen des Ansteuersignals (62) umfasst:

- Ermitteln (106) einer aktuell erwarteten Gaspedalstellung (96) des Zugfahrzeugs (12) des Anhängerfahrzeugs (16),
- Vergleichen (108) der empfangenen aktuellen Gaspedalstellung (23) mit der erwarteten Gaspedalstellung (96) zum Ermitteln eines Vergleichsergebnisses (110) und
- Erzeugen (112) des Ansteuerdrehmomentwerts (114) zur Ausgabe als Ansteuersignal (62) für den elektrischen Antrieb (52) zusätzlich in Abhängigkeit des Vergleichsergebnisses (110).

**7.** Verfahren nach Anspruch 6, wobei das Ermitteln (106) einer aktuell erwarteten Gaspedalstellung (96) des Zugfahrzeugs (12) in Abhängigkeit einer Gaspedalstellungskennlinie (90) bestimmt wird, die eine erwartete Gaspedalstellung (96) in Abhängigkeit einer aktuellen Geschwindigkeit (69) des Anhängerfahrzeugs (16) angibt.

**8.** Verfahren nach Anspruch 7, wobei die Gaspedalstellungskennlinie (90) in Abhängigkeit weiterer Zustände (107) des Fahrzeugs (12) oder Anhängerfahrzeugs (16), insbesondere der aktuellen Masse des Anhängerfahrzeugs (16), angepasst (105) wird.

**9.** Verfahren nach einem der vorhergehenden Ansprüche, wobei der Ansteuerdrehmomentwert (114) bestimmt wird durch:

$$M^* = \frac{100\%}{100\% - A^*} \cdot (A - A^*) \cdot M_{max}(S1, v),$$

wobei
M* der ermittelte Ansteuerdrehmomentwert (114) ist, A* der erwarteten Gaspedalstellung (96) entspricht, A der empfangenen Gaspedalstellung (23) entspricht und $M_{max}(S1, v)$ dem maximalen Drehmomentwert (84) in Abhängigkeit der aktuellen Geschwindigkeit (69) entspricht.

**10.** Fahrzeugbremssteuergerät (32) für ein Zugfahrzeug (12), wobei das Fahrzeugbremssteuergerät (32) eingerichtet ist, eine Gaspedalstellung (23) mittels eines ISO 11992-2 CAN-Busses (30), nämlich in der Botschaft EBS 11, auszugeben und ein Ansteuersignal (62) zum Ansteuern des elektrischen Antriebs (52) eines mit dem Zugfahrzeug (12) kuppelbaren Anhängerfahrzeugs (16) über den ISO 11992-2 CAN-Bus von einem Anhängerbremssteuergerät (42), nämlich in Botschaft 21 und/oder 23, zu empfangen und wobei das Fahrzeugbremssteuergerät (32) eingerichtet ist, in Abhängigkeit des Ansteuersignals (62) ein Anforderungssignal (114) für ein Fahrzeugsteuergerät (28) des Zugfahrzeugs (12) auszugeben.

**11.** Anhängerbremssteuergerät (42) für ein Anhängerfahrzeug (16), das eingerichtet ist, ein Verfahren nach einem der Ansprüche 1 bis 9 auszuführen, nämlich eine Gaspedalstellung (23) von einem Zugfahrzeug (12) zu empfangen und ein Ansteuersignal (62) in Abhängigkeit der empfangenen Gaspedalstellung (23) zu erzeugen und an einen elektrischen Antrieb (52) des Anhängerfahrzeugs (16) auszugeben.

**12.** Fahrzeug (12) mit einem Fahrzeugbremssteuergerät (32) nach Anspruch 10 oder einem Anhängerbremssteuergerät (42) nach Anspruch 11.

**13.** Computerprogrammprodukt, das ausgeführt auf einem Anhängerbremssteuergerät (42) nach Anspruch 11 das Verfahren nach einem der Ansprüche 1 bis 9 ausführt.

## Claims

1. Method for a trailer vehicle (16) which can be coupled to a towing vehicle (12) and comprises an electric drive (52), which method is for controlling (120) the electric drive (52) and comprises the steps of:

   - receiving (109) a current accelerator pedal position (23) from a towing vehicle (12) by means of a trailer brake control unit (42) of the trailer vehicle (16),
   - generating (104,106,108,112,116) a control signal (62) for the electric drive (52) by means of the trailer brake control unit (42) depending on the received current accelerator pedal position (23) and
   - controlling (120) the electric drive (52) by means of the generated control signal (62),

   **characterized in that**

   the accelerator pedal position (23) is received via an ISO 11992-2 CAN bus (30), specifically in message EBS 11, and
   the control signal (62) is output to a vehicle brake control unit (32) of the towing vehicle (12) via the ISO 11992-2 CAN bus (30), specifically in message 21 and/or 23, as an absolute value (63) in message 23 and as a relative value (61) in message 21, and a request signal (126) for a vehicle control unit (28) is generated in the vehicle brake control unit (32) depending on the control signal (62).

2. Method according to claim 1, wherein, furthermore, a charge state (64) of at least one accumulator (54) of the electric drive (52) is detected by the trailer brake control unit (42), and the control signal (62) is generated by the trailer brake control unit (42) depending on the accelerator pedal position (23) and the detected charge state (64).

3. Method according to either claim 1 or 2, wherein generating the control signal (62) comprises:

   - detecting or providing (100) a current speed (69) of the trailer vehicle (16) in the trailer brake control unit (42),
   - determining (104) a maximum torque value (84) of the electric drive (52) using a torque characteristic curve (82), which has speed-dependent maximum torque values (84), and the detected or provided current speed (69) and
   - determining (112) a control torque value (114) depending on the accelerator pedal position (23) and the determined maximum torque value (84),
   - outputting (118) the determined control torque value (114) or an adjusted control torque value (115) dependent on the determined control torque value (114) as a control signal (62) to the electric drive (52).

4. Method according to claim 3, wherein a charge state (64) of an accumulator (54) of the electric drive (52) is detected by the trailer brake control unit (42), and the control torque value (114) generated by the trailer brake control unit (42) is adjusted (116) depending on the detected charge state (64) and the adjusted control torque value (115) is output as a control signal (62) to the electric drive (52).

5. Method according to claim 4, wherein the adjustment (116) of the control torque value (114) is carried out such that

   - in the event that the charge state (64) of the at least one accumulator (54) is above a predefined threshold value (119) or threshold value range (120), the control torque value (114) is increased, in particular by a predefined value (121) or a predefined relative value (122) of the control torque value (114), and
   - in the event that the charge state (64) of the at least one accumulator (54) is below the or a further predefined threshold value (119) or threshold value range (120) of the charge state (64), the control torque value (114) is reduced, in particular by the or a further predefined value (121) or the or a further predefined relative value (122) of the control torque value (114).

6. Method according to any of the preceding claims, wherein generating the control signal (62) comprises:

   - determining (106) a currently expected accelerator pedal position (96) of the towing vehicle (12) of the trailer vehicle (16),
   - comparing (108) the received current accelerator pedal position (23) with the expected accelerator pedal position (96) in order to determine a comparison result (110) and
   - generating (112) the control torque value (114) for output as a control signal (62) for the electric drive (52) additionally depending on the comparison result (110).

7. Method according to claim 6, wherein the determination (106) of a currently expected accelerator pedal position (96) of the towing vehicle (12) is determined depending on an accelerator pedal position characteristic curve (90), which indicates an expected accelerator pedal position (96) depending on a current speed (69) of the trailer vehicle (16).

8. Method according to claim 7, wherein the accelerator pedal position characteristic curve (90) is adjusted (105) depending on further states (107) of the vehicle (12) or trailer vehicle (16), in particular the current mass of the trailer vehicle (16).

9. Method according to any of the preceding claims, wherein the control torque value (114) is determined by:

$$M^* = \frac{100\%}{100\% - A^*} \cdot (A - A^*) \cdot M_{max}(S1, v),$$

where

$M^*$ is the determined control torque value (114), $A^*$ corresponds to the expected accelerator pedal position (96), A corresponds to the received accelerator pedal position (23) and $M_{max}(S1, v)$ corresponds to the maximum torque value (84) depending on the current speed (69).

10. Vehicle brake control unit (32) for a towing vehicle (12), wherein the vehicle brake control unit (32) is configured to output an accelerator pedal position (23) by means of an ISO 11992-2 CAN bus (30), specifically in message EBS 11, and to receive from a trailer brake control unit (42) via the ISO 11992-2 CAN bus, specifically in message 21 and/or 23, a control signal (62) for controlling the electric drive (52) of a trailer vehicle (16) that can be coupled to the towing vehicle (12) and wherein the vehicle brake control unit (32) is configured to output a request signal (114) for a vehicle control unit (28) of the towing vehicle (12) depending on the control signal (62).

11. Trailer brake control unit (42) for a trailer vehicle (16), which is configured to carry out a method according to any of claims 1 to 9, specifically to receive an accelerator pedal position (23) from a towing vehicle (12) and to generate a control signal (62) depending on the received accelerator pedal position (23) and to output it to an electric drive (52) of the trailer vehicle (16).

12. Vehicle (12) comprising a vehicle brake control unit (32) according to claim 10 or a trailer brake control unit (42) according to claim 11.

13. Computer program product which, when carried out on a trailer brake control unit (42) according to claim 11, carries out the method according to any of claims 1 to 9.

**Revendications**

1. Procédé pour un véhicule remorqué (16) pouvant être accouplé à un véhicule tracteur (12) comportant un entraînement (52) électrique destiné à commander (120) l'entraînement (52) électrique, comprenant les étapes de :

   - réception (109), en provenance d'un véhicule tracteur (12), d'une position actuelle de pédale d'accélérateur (23) au moyen d'un appareil de commande de frein de remorque (42) du véhicule remorqué (16),
   - génération (104, 106, 108, 112, 116), au moyen de l'appareil de commande de frein de remorque (42), d'un signal de commande (62) pour l'entraînement (52) électrique en fonction de la position actuelle de pédale d'accélérateur (23) reçue et
   - commande (120) de l'entraînement (52) électrique au moyen du signal de commande (62) généré,

   **caractérisé en ce que**

   la position de pédale d'accélérateur (23) est reçue par l'intermédiaire d'un bus CAN ISO 11992-2 (30), notamment dans le message EBS 11, et
   le signal de commande (62) est délivré à un appareil de commande de frein de véhicule (32) du véhicule tracteur (12) par l'intermédiaire du bus CAN ISO 11992-2 (30), notamment dans le message 21 et/ou 23 en tant que valeur absolue (63) dans le message 23 et en tant que valeur relative (61) dans le message 21, et un signal de demande (126) pour un appareil de commande de véhicule (28) est généré dans l'appareil de commande de frein de véhicule (32) en fonction du signal de commande (62).

2. Procédé selon la revendication 1, dans lequel en outre un état de charge (64) d'au moins un accumulateur (54) de l'entraînement (52) électrique est détecté par l'appareil de commande de frein de remorque (42), et le signal de commande (62) est généré au moyen de l'appareil de commande de frein de remorque (42) en fonction de la position de pédale d'accélérateur (23) et de l'état de charge (64) détecté.

3. Procédé selon la revendication 1 ou 2, dans lequel la génération du signal de commande (62) comprend :

   - la détection ou la fourniture (100) d'une vitesse (69) actuelle du véhicule remorqué (16) dans l'appareil de commande de frein de remorque (42),
   - la détermination (104) d'une valeur de couple (84) maximale de l'entraînement (52) électrique à l'aide d'une caractéristique de couple (82) comportant des valeurs de couple (84) maximales dépendant de la vitesse et la vitesse (69) actuelle détectée ou fournie et

- la détermination (112) d'une valeur de couple de commande (114) en fonction de la position de pédale d'accélérateur (23) et de la valeur de couple (84) maximale déterminée,

- la délivrance (118), à l'entraînement (52) électrique, de la valeur de couple de commande (114) déterminée ou d'une valeur de couple de commande (115) adaptée dépendant de la valeur de couple de commande (114) déterminée, en tant que signal de commande (62).

**4.** Procédé selon la revendication 3, dans lequel un état de charge (64) d'un accumulateur (54) de l'entraînement (52) électrique est détecté par l'appareil de commande de frein de remorque (42), et la valeur de couple de commande (114) générée par l'appareil de commande de frein de remorque (42) est adaptée (116) en fonction de l'état de charge (64) détecté et la valeur de couple de commande (115) adaptée est délivrée à l'entraînement (52) électrique en tant que signal de commande (62).

**5.** Procédé selon la revendication 4, dans lequel l'adaptation (116) de la valeur de couple de commande (114) est effectuée de telle sorte que,

- dans le cas où l'état de charge (64) de l'au moins un accumulateur (54) est supérieur à une valeur seuil (119) prédéfinie ou une plage de valeurs seuils (120) prédéfinie, la valeur de couple de commande (114) est augmentée, en particulier par une valeur (121) prédéfinie ou une valeur relative (122) prédéfinie de la valeur de couple de commande (114), et

- dans le cas où l'état de charge (64) de l'au moins un accumulateur (54) est inférieur à la ou à une autre valeur seuil (119) prédéfinie ou une plage de valeurs seuils (120) prédéfinie de l'état de charge (64), la valeur de couple de commande (114) est diminuée, en particulier par la ou une autre valeur (121) prédéfinie ou la ou une autre valeur relative (122) prédéfinie de la valeur de couple de commande (114).

**6.** Procédé selon l'une des revendications précédentes, dans lequel la génération du signal de commande (62) comprend :

- la détermination (106) d'une position de pédale d'accélérateur (96) actuellement attendue du véhicule tracteur (12) du véhicule remorqué (16),

- la comparaison (108) de la position actuelle de pédale d'accélérateur (23) reçue à la position attendue de pédale d'accélérateur (96) pour déterminer un résultat de comparaison (110) et

- la génération (112) de la valeur de couple de commande (114) pour la délivrer en tant que signal de commande (62) pour l'entraînement (52) électrique en fonction, en outre, du résultat de comparaison (110).

**7.** Procédé selon la revendication 6, dans lequel la détermination (106) d'une position de pédale d'accélérateur (96) actuellement attendue du véhicule tracteur (12) est déterminée en fonction d'une caractéristique de position de pédale d'accélérateur (90) qui indique une position de pédale d'accélérateur (96) attendue en fonction d'une vitesse (69) actuelle du véhicule remorqué (16).

**8.** Procédé selon la revendication 7, dans lequel la caractéristique de position de pédale d'accélérateur (90) est adaptée (105) en fonction d'autres états (107) du véhicule (12) ou du véhicule remorqué (16), en particulier de la masse actuelle du véhicule remorqué (16).

**9.** Procédé selon l'une des revendications précédentes, dans lequel la valeur de couple de commande (114) est déterminée par :

$$M^* = \frac{100\%}{100\% - A^*} \cdot (A - A^*) \cdot M_{max}(S1, v),$$

où

M* est la valeur de couple de commande (114) déterminée, A* correspond à la position attendue de pédale d'accélérateur (96), A correspond à la position de pédale d'accélérateur (23) reçue et $M_{max}(S1, v)$ correspond à la valeur de couple (84) maximale en fonction de la vitesse (69) actuelle.

**10.** Appareil de commande de frein de véhicule (32) pour un véhicule tracteur (12), dans lequel l'appareil de commande de frein de véhicule (32) est configuré pour délivrer une position de pédale d'accélérateur (23) à l'aide d'un bus CAN ISO 11992-2 (30), notamment dans le message EBS 11, et pour recevoir, en provenance d'un appareil de commande de frein de remorque (42), un signal de commande (62) destiné à commander l'entraînement (52) électrique d'un véhicule remorqué (16) pouvant être accouplé au véhicule tracteur (12) par l'intermédiaire du bus CAN ISO 11992-2, notamment dans le message 21 et/ou 23, et dans lequel l'appareil de commande de frein de véhicule (32) est configuré pour délivrer, en fonction du signal de commande (62), un signal de demande (114) pour un appareil de commande de véhicule (28) du véhicule tracteur (12).

**11.** Appareil de commande de frein de remorque (42) pour un véhicule remorqué (16), lequel appareil de commande de frein de remorque est configuré pour mettre en oeuvre un procédé selon l'une des revendications 1 à 9, notamment pour recevoir une position de pédale d'accélérateur (23) en provenance d'un véhicule tracteur (12), pour générer un signal de commande (62) en fonction de la position de pédale d'accélérateur (23) reçue et pour le délivrer à un entraînement (52) électrique du véhicule remorqué (16).

12. Véhicule (12) comportant un appareil de commande de frein de véhicule (32) selon la revendication 10 ou un appareil de commande de frein de remorque (42) selon la revendication 11.

13. Produit programme d'ordinateur qui, mis en oeuvre sur un appareil de commande de frein de remorque (42) selon la revendication 11, met en oeuvre le procédé selon l'une des revendications 1 à 9.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2842814 B1
- EP 2394890 B1
- US 9694712 B2
- US 2018304944 A1
- EP 2394890 A1

- US 2016318406 A1
- DE 102016123350 A1
- EP 1234739 A2
- US 2012245796 A1
- DE 102015222981 A1